(19) Europäisches Patentamt
European Patent Office
Office européen des brevets

(11) EP 3 366 726 B1

(12) **EUROPEAN PATENT SPECIFICATION**

(45) Date of publication and mention of the grant of the patent:
**03.07.2019 Bulletin 2019/27**

(21) Application number: **17806907.6**

(22) Date of filing: **16.05.2017**

(51) Int Cl.:
***C08L 79/08*** *(2006.01)*
***C08G 73/14*** *(2006.01)*
***C08G 73/10*** *(2006.01)*
***C08J 7/04*** *(2006.01)*
***C08J 5/18*** *(2006.01)*

(86) International application number:
**PCT/KR2017/005046**

(87) International publication number:
**WO 2017/209414 (07.12.2017 Gazette 2017/49)**

(54) **HIGH-STRENGTH TRANSPARENT POLYAMIDIMIDE AND METHOD FOR PREPARING SAME**

HOCHFESTES TRANSPARENTES POLYAMID UND VERFAHREN ZUR HERSTELLUNG DAVON

POLYAMIDIMIDE TRANSPARENT À HAUTE RÉSISTANCE ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.06.2016 KR 20160068121**

(43) Date of publication of application:
**29.08.2018 Bulletin 2018/35**

(73) Proprietor: **LG Chem, Ltd.**
**Seoul 07336 (KR)**

(72) Inventors:
- **YUN, Cheolmin**
  **Daejeon 34122 (KR)**
- **SUH, Jun Sik**
  **Daejeon 34122 (KR)**
- **KIM, Kyungjun**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 2 800 104**
**WO-A1-2013/048126**
**JP-A- H09 188 762**
**KR-A- 20150 065 975**
**US-B2- 9 200 117**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 366 726 B1

## Description

[Technical Field]

The present invention relates to a colorless and transparent polyamide-imide having a mechanical property of high strength and chemical resistance, and a method for manufacturing thereof.

[Background Art]

Polyimide (PI) is a polymer having relatively low crystallinity or amorphous structure, and it has advantages such as easy manufacturing process, easy process to make a thin film and no crosslinkable moieties necessary for curing, as well as polymeric properties such as high transparency, excellent flame and chemical resistance, excellent mechanical and electrical properties, and dimensional stability due to its rigid chain structure. The polyimide is now widely used as an electrical and electronical material for the field of car and aerospace, a flexible circuit board, a liquid crystal alignment film for LCD, an adhesive as well as a coating agent.

However, even though the polyimide is a high performance polymer with excellent thermal stability, mechanical properties, chemical resistance and electrical properties, it does not satisfy the basic requirements for the display area such as colorless transparency, and the thermal expansion coefficient should be further lowered. For example, KAPTON sold by Dupont has low thermal coefficient of about 30 ppm/°C, but it also does not meet the requirement for the plastic substrate. Therefore, now studies for minimizing change in thermal history and optical properties while maintaining the basic properties of the polyimide are underway.

In general, aromatic polyimide has unique color of dark brown. The reason for this is that electrons can be excited due to a $\sigma$ electron, a $\pi$ electron, a nonbonding unshared electron pair within the imide structure, and it can be explained by the theory of charge transfer complex (hereinafter, called CT-complex) induced by $\pi$ electrons of benzene within a main chain of the polyimide.

In general, the polyimide absorbs light of the wavelength below 400 nm to 500 nm of visible light region, and therefore it shows complementary color of yellow to red. In order to lower the CT-complex that is an disadvantage of the polyimide, a method of introducing an electron-withdrawing functional group having relatively strong electronegativity such as trifluoromethyl (($-CF_3$), sulfone ($-SO_2$) and ether (-O-) to the main chain of the polyimide is used to lower resonance effect by limiting the movement of $\pi$ electron. Also introducing a cyclo-olefin structure instead of benzene to the main chain of the polyimide can reduce $\pi$ electron density to manufacture a colorless transparent polyimide film.

Meanwhile, polyamide-imide has been widely used as an industrial material in the electrical, mechanical, electronic and aerospace fields due to its excellent properties such as thermal resistance, mechanical strength and electrical property. Also, in general, structure of the polyamide-imide is different from that of the polyimide and is known to be soluble in an organic solvent, allowing for the application for an enamel varnish, a coating agent for electrical insulation and paint, which need solution casting.

However, for the application in the display area, it is still necessary to develop a polymer for the flexible display with lower thermal expansion coefficient, high solubility, transparency as well as thermal stability.

[Disclosure]

[Technical Problem]

One object of the present invention is to provide polyamide-imide with enhanced transparency and mechanical strength.

Another object of the present invention is to provide a method for manufacturing the polyamide-imide.

Further object of the present invention is to provide high strength transparent polyamide-imide film manufactured with the polyamide-imide.

[Technical Solution]

In order to accomplish the aforementioned object, the present invention provides polyamide-imide containing a repeating structure of the following Chemical Formula 1a, a repeating structure of the following Chemical Formula 1b and a repeating structure of the following Chemical Formula 1c together as well as containing a terminal group of the following Chemical Formula 1d:

[Chemical Formula 1a]

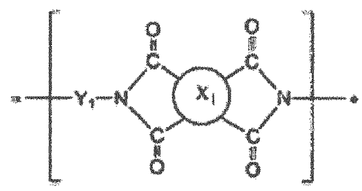

[Chemical Formula 1b]

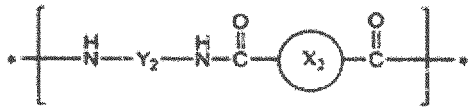

[Chemical Formula 1c]

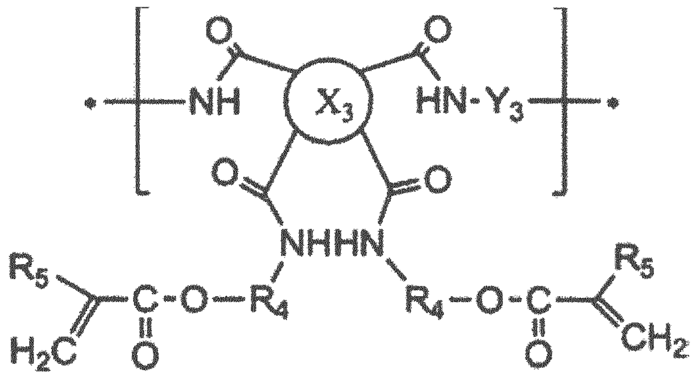

[Chemical Formula 1d]

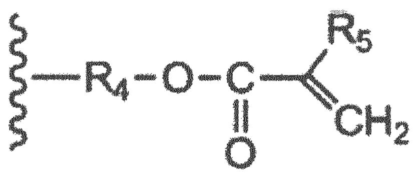

wherein,

$X_1$ and $X_3$ may be a tetravalent organic group derived from tetracarboxylic dianhydride,
$X_2$ may be a divalent aromatic organic group derived from dicarboxyl halide,
$Y_1$, $Y_2$ and $Y_3$ may be a divalent organic group derived from diamine,
$R_4$ may be a $C_{1-18}$ alkylene group or a $C_{6-24}$ arylene group or a divalent organic group wherein the groups are linked by an ether bond, an ester bond, an urethane bond, an amide bond, a siloxane bond or a silazane bond, and
$R_5$ may be a hydrogen atom or a $C_{1-18}$ alkyl group.

Further, the present invention provides a method for manufacturing the polyamide-imide.

In order to accomplish the other object, the present invention provides a polyamide-imide film comprising the polyamide-imide.

[Advantageous Effects]

The present invention provides a polyamide-imide film with highly enhanced mechanical properties, heat resistance and chemical resistance while maintaining transparency. The polyamide-imide with excellent transparency, heat resistance, mechanical strength and flexibility as well as chemical resistance against a solvent can be used in

various fields such as a substrate for a device, a cover substrate for a display, an optical film, an integrated circuit (IC) package, an adhesive film, a multi-layer flexible printed circuit (FPC), a tape, a touch panel and a protection film for an optical disk.

[Mode for Invention]

Various changes in form and details may be made to the presently disclosed embodiment and thus should not be construed as being limited to the aspects set forth herein. The presently disclosed embodiment is not limited to the aspects described in the present description, and thus it should be understood that the presently disclosed embodiment does not include every kind of variation example or alternative equivalent included in the spirit and scope of the presently disclosed embodiment. Also, while describing the aspects, detailed descriptions about related well-known functions or configurations that may diminish the clarity of the points of the aspects of the presently disclosed embodiment will be omitted.

Unless particularly stated otherwise herein, all the compounds or organic groups may be substituted or unsubstituted. Herein, the term 'substituted' means that at least one hydrogen atom in such a compound or substituent has been replaced by any one substituent selected from the group consisting of a halogen atom, a $C_{1-10}$ alkyl group, a halogenated alkyl group, a $C_{3-30}$ cycloalkyl group, a $C_{6-30}$ aryl group, a hydroxyl group, a $C_{1-10}$ alkoxyl group, a carboxyl group, an aldehyde group, an epoxy group, a cyano group, a nitro group, an amino group, a sulfonic acid group and derivatives thereof.

Further, unless particularly stated otherwise herein, the term 'combination thereof means that two or more functional groups are bonded by a single bond, a double bond, a triple bond or a linking group such as a $C_{1-10}$ alkylene group (e.g., methylene group ($-CH_2$), ethylene group ($-CH_2CH_2-$), etc.), a $C_{1-10}$ fluoroalkylene group (e.g., fluoromethylene group ($-CF_2-$), a perfluoroethylene group ($-CF_2CF_2-$), etc.), a hetero atom such as N, O, P, S or Si, or a functional group containing thereof (e.g., intramolecular carbonyl group (-C=O-), ether group (-O-), ester group (-COO-), heteroalkylene group containing -S-, -NH-, -N=N-, etc.), or two or more functional groups are connected by condensation.

Polyimide is a polymer composed of rigid aromatic groups and imide bonds, thereby having excellent mechanical properties and heat resistance, and it is variously used in many industrial fields based on such characteristics. However, the existing polyimide may be yellowed because it absorbs light in part of visible light region by electron transfer in chains and between chains, and the yellowness may hinder possibility as a highly heat resistant and transparent material for a display. This yellowness may be caused by charge transfer complex, and it may be more severely occurred as more packing is happened between the polyimide polymer chains.

In order to solve these existing problems,

the present invention provides polyamide-imide containing a repeating structure of the following Chemical Formula 1a, a repeating structure of the following Chemical Formula 1b and a repeating structure of the following Chemical Formula 1c together as well as containing a terminal group of the following Chemical Formula 1d:

[Chemical Formula 1a]

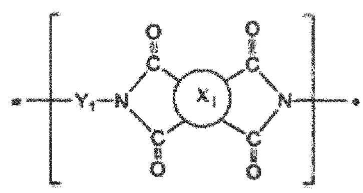

[Chemical Formula 1b]

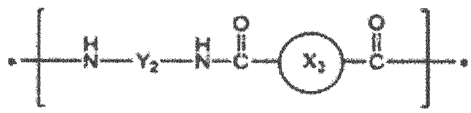

[Chemical Formula 1c]

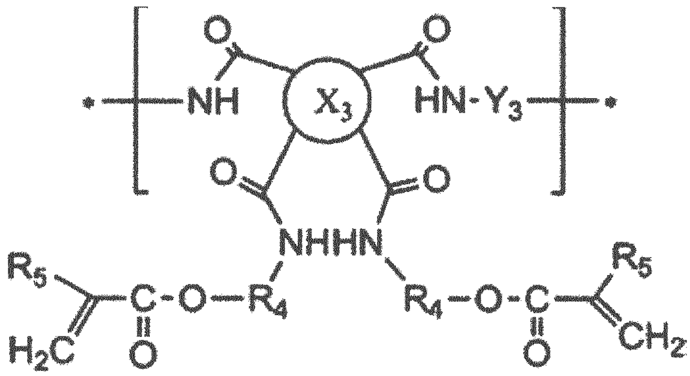

[Chemical Formula 1d]

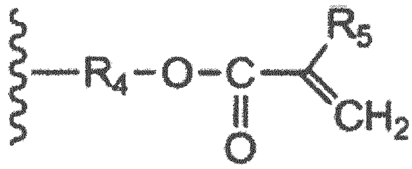

wherein,

$X_1$ and $X_3$ may be a tetravalent organic group derived from tetracarboxylic dianhydride,
$X_2$ may be a divalent aromatic organic group derived from dicarboxyl halide,
$Y_1$, $Y_2$ and $Y_3$ may be a divalent organic group derived from diamine,
$R_4$ may be a $C_{1-18}$ alkylene group or a $C_{6-24}$ arylene group or a divalent organic group wherein the groups are linked by an ether bond, an ester bond, an urethane bond, an amide bond, a siloxane bond or a silazane bond, wherein at least one hydrogen contained in the divalent organic group may be substituted or unsubstituted with a substituent selected from the group consisting of a halogen atom, a $C_{1-10}$ alkyl group, a halogenated alkyl group, a $C_{3-30}$ cycloalkyl group, a $C_{6-30}$ aryl group, a hydroxyl group, a $C_{1-10}$ alkoxyl group, a carboxyl group, an aldehyde group, an epoxy group, a cyano group, a nitro group, an amino group, a sulfonic acid group and derivatives thereof, preferably substituted with a halogen atom, a $C_{1-10}$ alkyl group or a halogenated alkyl group, and
$R_5$ may be a hydrogen atom or a $C_{1-18}$ alkyl group.

In the present invention, polyamide may be introduced to the polyimide main chain, and the polymer also has excellent mechanical properties, heat resistance and chemical resistance like polyimide, and may improve optical characteristics because it can prevent packing between polymer chains and further reduce charge transfer during copolymerization with the polyimide.
Further, the side chain of the Chemical Formula 1c and the terminal group containing an acrylate group of the Chemical Formula 1d are structures having heat curability or photo-curability, which can cure the polyamide-imide more quickly and also can reduce packing between chains. Thus, charge transfer between chains or in chains which can be caused by the packing between chains can be inhibited more effectively. This can reduce transmittance decline of a film and discoloration caused by yellowness, thereby providing more rigid and colorless transparent polyamide-imide film.
Further, the polyamide-imide having the side chain and terminal group is excellent in chemical resistance and weather resistance after processing.
In the Chemical Formula 1a to Chemical Formula 1d,
$X_1$ and $X_3$ may be a tetravalent organic group of the following Chemical Formula 2 derived from tetracarboxylic dianhydride, and $X_2$ may be a divalent organic group derived from the compound of the following Chemical Formula 3:

[Chemical Formula 2]

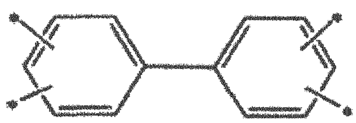

[Chemical Formula 3]

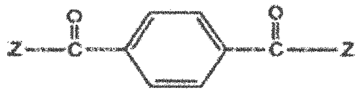

wherein,

Z may be one selected from a hydroxyl group (-OH), a halide group selected from -Cl, -Br, -F and -I, and a $C_{1-5}$ alkoxyl group (-OR),
$Y_1$, $Y_2$ and $Y_3$ may be a divalent organic group derived from diamine, and at least one thereof may contain a structure of the following Chemical Formula 4:

[Chemical Formula 4]

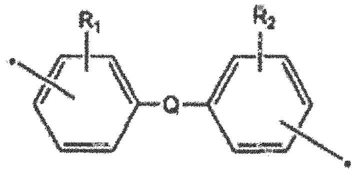

wherein,

$R_1$ and $R_2$ may be each independently a substituent selected from a halogen atom comprising -F, -Cl, -Br and -I, a hydroxyl group (-OH), a thiol group (-SH), a nitro group ($-NO_2$), a cyano group, a $C_{1-10}$ alkyl group, a $C_{1-4}$ halogenoalkoxyl group, a $C_{1-10}$ halogenoalkyl group, and a $C_{6-20}$ aryl group, and preferably, it may be a substituent selected from a halogen atom, a halogenoalkyl, an alkyl group, an aryl group and a cyano group. For example, the halogen atom may be fluorine (-F), the halogenoalkyl may be a $C_{1-10}$ fluoroalkyl containing a fluorine atom selected from a fluoromethyl group, a perfluoroethyl group, a trifluoromethyl group and the like. The alkyl group may be selected from a methyl group, an ethyl group, a propyl group, an isopropyl group, a t-butyl group, a pentyl group and a hexyl group, and the aryl group may be selected from a phenyl group and a naphthalenyl group. More preferably, the substituent may be a fluorine atom and a fluoroalkyl group containing a fluorine atom.
Q may be selected from the group consisting of a single bond, -O-, - $CR_{18}R_{19}$-, -C(=O)-, -C(=O)O-, -C(=O)NH-, -S-, $-SO_2-$, a phenylene group and a combination thereof, wherein $R_{18}$ and $R_{19}$ may each independently selected from the group consisting of a hydrogen atom, a $C_{1-10}$ alkyl group and a $C_{1-10}$ fluoroalkyl group.

According to one embodiment, the hydrogen in the aromatic ring of the Chemical Formula 2 may be replaced by a substitute selected from a halogen atom comprising -F, -Cl, -Br and -I, a hydroxyl group (-OH), a thiol group (-SH), a nitro group ($-NO_2$), a cyano group, a $C_{1-10}$ alkyl group, a $C_{1-4}$ halogenoalkoxyl group, a $C_{1-10}$ halogenoalkyl group and a $C_{6-20}$ aryl group. For example, the halogen atom may be fluorine (-F), the halogenoalkyl may be a $C_{1-10}$ fluoroalkyl containing a fluorine atom selected from a fluoromethyl group, a perfluoroethyl group, a trifluoromethyl group and the like, the alkyl group may be selected from a methyl group, an ethyl group, a propyl group, an isopropyl group, a t-butyl group, a pentyl group and a hexyl group, and the aryl group may be selected from a phenyl group and a naphthalenyl group. More preferably, the substituent may be a fluorine atom and a fluoroalkyl group containing a fluorine atom.
According to one embodiment, the compound of the Chemical Formula 2 may be selected from tetracarboxylic dianhydrides having structures of the following Chemical Formula 2a to Chemical Formula 2e.

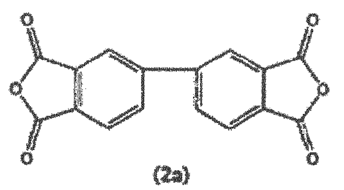
(2a)

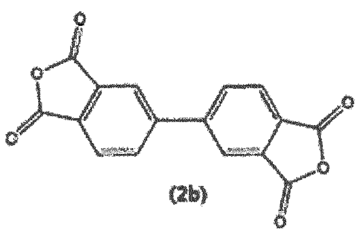
(2b)

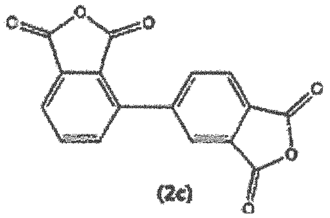

(2c)

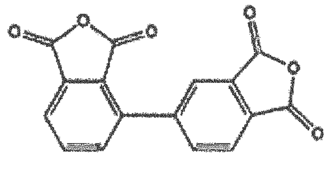

(2d)

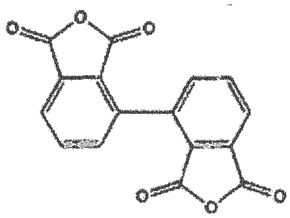

(2e)

The hydrogen in the aromatic ring of the Chemical Formula 2 may be replaced by a substituent selected from a halogen atom comprising -F, -Cl, -Br and -I, a hydroxyl group (-OH), a thiol group (-SH), a nitro group ($-NO_2$), a cyano group, a $C_{1-10}$ alkyl group, a $C_{1-4}$ halogenoalkoxyl group, a $C_{1-10}$ halogenoalkyl group and a $C_{6-20}$ aryl group. For example, the halogen atom may be fluorine (-F), the halogenoalkyl may be a $C_{1-10}$ fluoroalkyl containing a fluorine atom selected from a fluoromethyl group, a perfluoroethyl group, a trifluoromethyl group and the like, the alkyl group may be selected from a methyl group, an ethyl group, a propyl group, an isopropyl group, a t-butyl group, a pentyl group and a hexyl group, and the aryl group may be selected from a phenyl group and a naphthalenyl group. More preferably, the substituent may be a fluorine atom and a fluoroalkyl group containing a fluorine atom.

According to one embodiment, the compound of the Chemical Formula 3 may be dicarboxyl dichloride of the following Chemical Formula 3a or dicarboxylic acid of the following Chemical Formula 3b.

[Chemical Formula 3a]

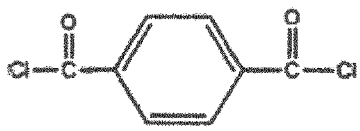

[Chemical Formula 3b]

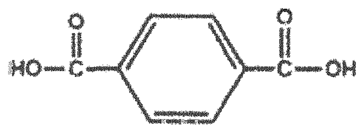

According to one embodiment, the side chain of the Chemical Formula 1c and the terminal group of the Chemical Formula 1d may be derived from the following Chemical Formula 5.

[Chemical Formula 5]

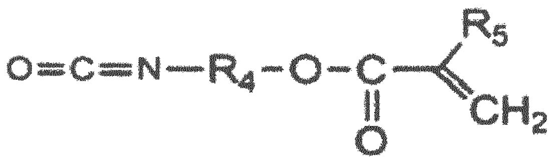

$R_4$ may be a $C_{1-18}$ alkylene group or a $C_{6-24}$ arylene group or a divalent organic group wherein the groups are linked by an ether bond, an ester bond, an urethane bond, an amide bond, a siloxane bond or a silazane bond, wherein

at least one hydrogen contained in the divalent organic group may be substituted or unsubstituted with a substituent selected from the group consisting of a halogen atom, a $C_{1-10}$ alkyl group, a halogenated alkyl group, a $C_{3-30}$ cycloalkyl group, a $C_{6-30}$ aryl group, a hydroxyl group, a $C_{1-10}$ alkoxyl group, a carboxyl group, an aldehyde group, an epoxy group, a cyano group, a nitro group, an amino group, a sulfonic acid group and derivatives thereof, preferably substituted with a halogen atom, a $C_{1-10}$ alkyl group or a halogenated alkyl group, and

$R_5$ may be a hydrogen atom or a $C_{1-18}$ alkyl group.

Further, the present invention provides a method for manufacturing the polyamide-imide comprising the steps of:

stirring a solution of diamine containing the structure of the following Chemical Formula 4;
adding tetracarboxylic dianhydride containing a structure of the following Chemical Formula 2 and the compound of the following Chemical Formula 3 to the diamine solution followed by reacting thereof to prepare a polyamide-imide precursor;
imidizing the polyamide-imide precursor; and
reacting the polyamide-imide with the compound of the following Chemical Formula 5:

[Chemical Formula 2]

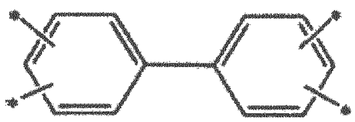

[Chemical Formula 3]

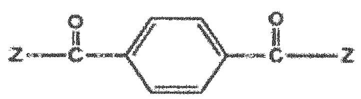

wherein,
Z may be selected from a hydroxyl group (-OH), a halide group selected from -Cl, -Br, -F and -I, and $C_{1-5}$ alkoxyl group (-OR),

[Chemical Formula 4]

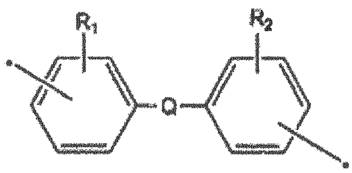

wherein,
$R_1$ and $R_2$ may be each independently a substituent selected from a halogen atom comprising -F, -Cl, -Br and -I, a hydroxyl group (-OH), a thiol group (-SH), a nitro group ($-NO_2$), a cyano group, a $C_{1-10}$ alkyl group, a $C_{1-4}$ halogenoalkoxyl group, a $C_{1-10}$ halogenoalkyl group, and a $C_{6-20}$ aryl group,

[Chemical Formula 5]

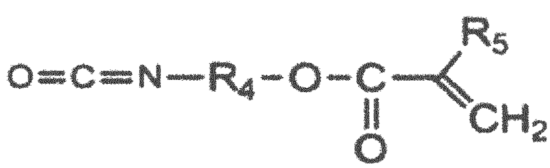

$R_4$ may be a $C_{1-18}$ alkylene group or a $C_{6-24}$ arylene group or a divalent organic group wherein the groups are linked by an ether bond, an ester bond, an urethane bond, an amide bond, a siloxane bond or a silazane bond, wherein at least one hydrogen contained in the divalent organic group may be substituted or unsubstituted with a substituent selected from the group consisting of a halogen atom, a $C_{1-10}$ alkyl group, a halogenated alkyl group, a $C_{3-30}$

cycloalkyl group, a $C_{6-30}$ aryl group, a hydroxyl group, a $C_{1-10}$ alkoxyl group, a carboxyl group, an aldehyde group, an epoxy group, a cyano group, a nitro group, an amino group, a sulfonic acid group and derivatives thereof, preferably substituted with a halogen atom, a $C_{1-10}$ alkyl group or a halogenated alkyl group, and

$R_5$ may be a hydrogen atom or a $C_{1-18}$ alkyl group.

Preferably, $R_4$ may be a $C_{1-18}$ alkylene group or a $C_{6-24}$ arylene group or a divalent organic group wherein the groups are linked by an ether bond, an ester bond, an urethane bond, an amide bond, a siloxane bond or a silazane bond.

The polyamide-imide according to the present invention may form the repeating structure containing the side chain of the Chemical Formula 1c and the terminal group of the Chemical Formula 1d by reacting the carbonyl group of the polyimide repeating structure of the Chemical Formula 1a and the isocyanate group of the compound of the Chemical Formula 5.

According to one embodiment, the compound of the Chemical Formula 5 may be reacted with the polyimide repeating structure derived from the compound of the Chemical Formula 2, and the compound of the Chemical Formula 5 may be added at molar ratio of 1:2 to 1:8, preferably 1:2 to 1:6 to the compound of the Chemical Formula 2.

For example, the compound of the Chemical Formula 4 may be selected from the compounds of the following Chemical Formula 4a to Chemical Formula 4d:

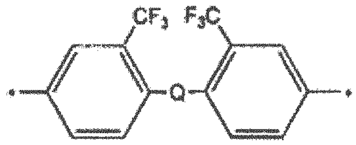

(4a)

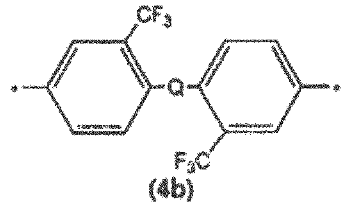

(4b)

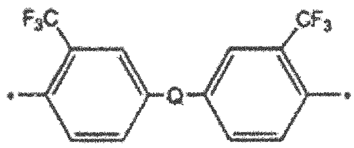

(4c)

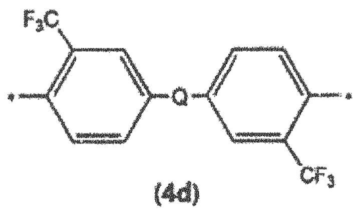

(4d)

wherein Q may have the same meanings as defined in the Chemical Formula 4.

According to one embodiment, the polyamide-imide may further contain a repeating structure formed from polymerization of anhydride and diamine. The anhydride which can be used in the present invention may be bicycloheptene dicarboxylic anhydride (Nadicanhydride), anthracenyl ethynyl phthalic anhydride (4-(9-anthracenyl ethynyl)phthalic anhydride), adamantanecarbonyl chloride (1-Adamantanecarbonyl chloride), adamantanedicarbonyl dichloride (1,3-Adamantanedicarbonyl dichloride), norbonenecarbonyl chloride (5-Norbonene-2-carbonyl chloride), norbonenedicarbonyl chloride (5-Norbonene-2,3-dicarbonyl chloride), cyclopentane carbonyl chloride (cyclopentane chloride) and the like, and the anhydride may be contained in an amount of 10 mol% or less based on the total mole of the acid dianhydride of the Chemical Formula 2 and the anhydride.

The polyamide-imide precursor contains repeating structures of the following Chemical Formula 6a and Chemical Formula 6b, and the polyimide repeating structure of the Chemical Formula 1a may be formed by imidizing the repeating structure of the Chemical Formula 6a.

[Chemical Formula 6a]

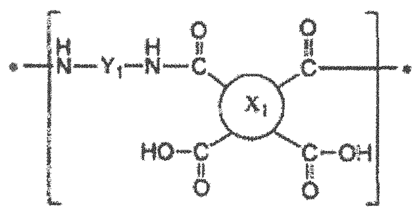

[Chemical Formula 6b]

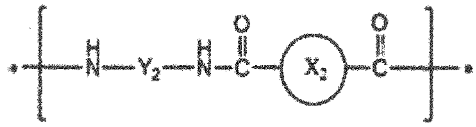

[Chemical Formula 1a]

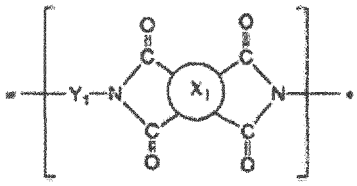

According to one embodiment, imidization rate of the structure containing the Chemical Formula 1a may be 80% to 100%, preferably 90% to 100%.

According to the present invention, the repeating structure having the side chain of the Chemical Formula 1c may be formed by reacting the polyamic acid of the Chemical Formula 6a with the compound of the Chemical Formula 5.

According to the present invention, the repeating structure of the Chemical Formula 1a and the repeating structure of the Chemical Formula 1b may be contained at molar ratio of 1: 0.5 to 5. It is preferred to contain the repeating structure of the Chemical Formula 1b more than the repeating structure of the Chemical Formula 1a, and for example, the repeating structures of the Chemical Formula 1a and the Chemical Formula 1b may be contained at molar ratio of 1: more than 1 to 4, more preferably 1: more than 1 to 3.

[Chemical Formula 1a]

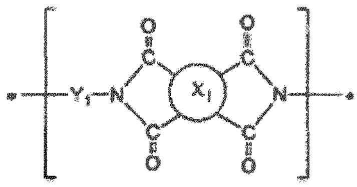

[Chemical Formula 1b]

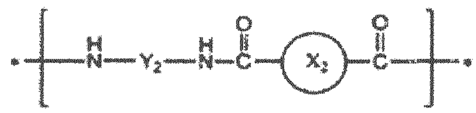

According to one embodiment, the tetracarboxylic dianhydride containing the tetravalent organic group of the Chemical Formula 2 and the compound of the following Chemical Formula 3 may be polymerized at molar ratio of 1: 0.5 to 5. Preferably, the compounds may be added at molar ratio of 1: more than 1 to 4, more preferably at molar ratio of 1: more than 1 to 3, and reacted with the compound of the Chemical Formula 5 to prepare a polyamide-imide precursor wherein the repeating structure of the Chemical Formula 1b more than the repeating structure of the Chemical Formula 1a.

[Chemical Formula 2]

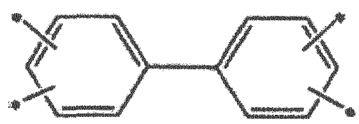

[Chemical Formula 3]

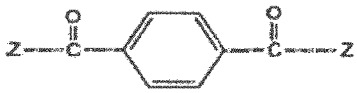

[Chemical Formula 5]

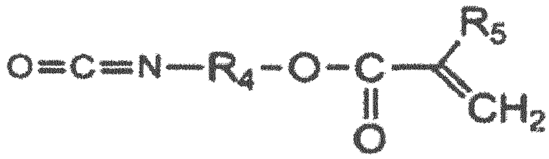

At this time, if the compound of the Chemical Formula 3 is reacted in an amount of 90 mol% or more, preferably more than 85 mol%, processability may be deteriorated, i.e., it may be difficult to manufacture a film because crystallinity caused by the polyamide is strongly applied, and therefore, optical characteristics such as transparency of the film thus obtained may be affected due to its deteriorated uniformity. Further, if the tetracarboxylic dianhydride of the Chemical Formula 2 is contained in an amount of 90 mol% or more, preferably 80 mol% or more or more than 70 mol%, there may be a problems that chains of the precursor may be degraded because the polyamic acid structure is vulnerable to moisture, and the problem may cause deterioration of mechanical properties or the film.

According to one embodiment, the polyamide-imide according to the present invention is a random copolymer wherein its repeating structures are randomly arranged. This arrangement may prevent charge transfer in chains and hinder regular arrangement, and it may minimize partial crystallization by hydrogen bonds between chains of the polyamide. Thus, a polyamide-imide film having better transparency can be obtained.

By introducing a polyamide group to the existing polyimide structure, the present invention can provide more colorless transparent polyamide-imide having excellent heat resistance and mechanical properties because the polyamide group may increase distance between chains and therefore prevent charge transfer complex caused by packing and minimize yellowness caused by the charge transfer complex.

Further, by containing the amide structure in the diamine structure, the present invention can manufacture an amide-introduced polyamide-imide chain more effectively, and by introducing a substituent having high electronegativity such as $R_1$ and $R_2$ to the diamine structure, the present invention can provide polyamide-imide having highly enhanced optical properties because the substituent can minimize charge transfer by inhibiting charge movement.

For example, the polyamide-imide according to the present invention may contain repeating structures of the following Chemical Formula 1a-1 to Chemical Formula 1c-1 and terminal groups having structures of Chemical Formula 1d-1 and/or 1d-2.

[Chemical Formula 1a-1]

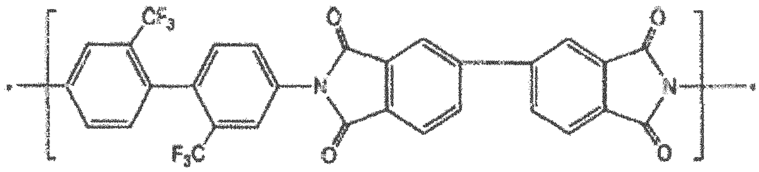

[Chemical Formula 1b-1]

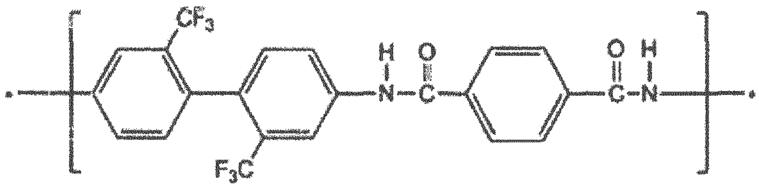

[Chemical Formula 1c-1]

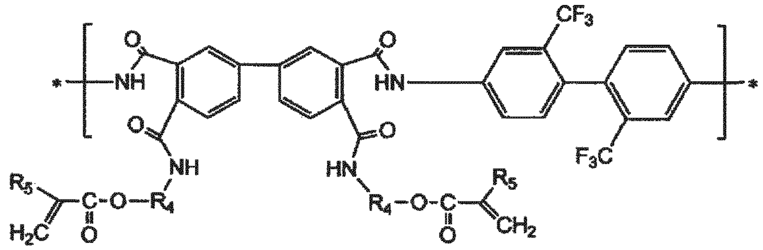

[Chemical Formula 1d-1]

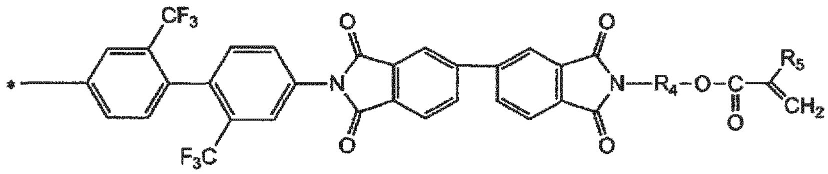

[Chemical Formula 1d-2]

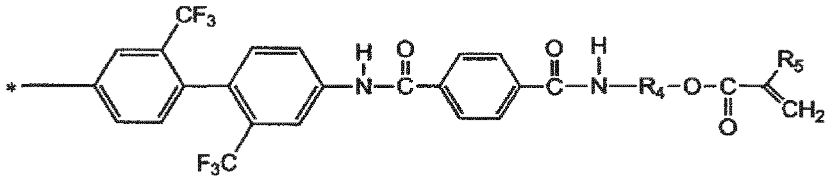

According to one embodiment, the polyamide-imide according to the present invention may be manufactured by further adding tetracarboxylic dianhydride which contains structures other than the tetracarboxylic dianhydride containing the structure of the Chemical Formula 2.

For example, the tetracarboxylic dianhydride further added may contain a tetravalent organic group containing a $C_{3-24}$ aliphatic ring or a $C_{6-30}$ aromatic ring, specifically, a tetravalent organic group of the following Chemical Formula 7a to Chemical Formula 7h, more preferably, a tetravalent organic group containing an aromatic or aliphatic ring having a rigid structure, i.e., a single ring structure, a structure wherein rings are linked by a single bond, or a polycyclic structure wherein each rings are linked directly.

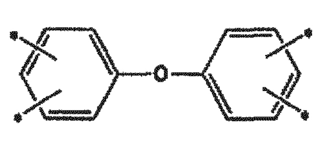

(7a)

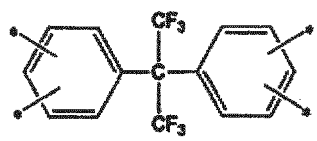

(7b)

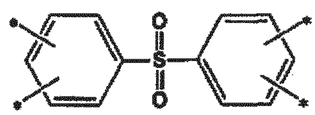

(7c)

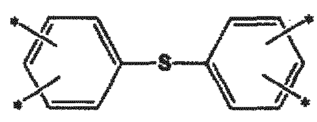

(7d)

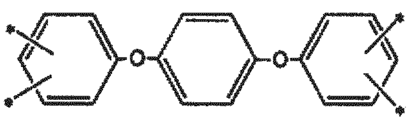

(7e)

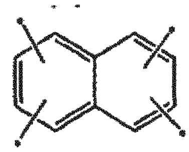

(7f)

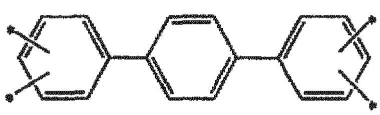

(7g)

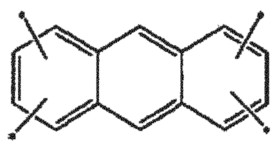

(7h)

At least one hydrogen atom in the tetravalent organic group of the Chemical Formula 7a to Chemical Formula 7h may be replaced by a substituent selected from the group consisting of a $C_{1-10}$ alkyl group (e.g., from a methyl group, an ethyl group, a propyl group, an isopropyl group, a t-butyl group, a pentyl group and a hexyl group), a $C_{1-10}$ fluoroalkyl (e.g., a fluoromethyl group, a perfluoroethyl group, a trifluoromethyl group and the like), a $C_{6-12}$ aryl group (for example, a phenyl group, a naphthalenyl group and the like), a sulfonic acid group and a carboxyl group, preferably a $C_{1-10}$ fluoroalkyl group.

In the repeating structures of the polyamide-imide precursor of the present invention, at least one repeating structure may include a divalent organic group and/or tetravalent organic group containing a fluorine-based substituent. Herein, the term 'fluorine-based substituent' means not only 'fluorine atom substituent' but also 'substituent containing a fluorine atom'. The fluorine-based substituent may be a $C_{1-10}$, preferably $C_{1-6}$ fluoroalkyl, and it may be contained in an amount of 30 mol% to 100 mol%, preferably 60 mol% to 100 mol%, and more preferably, 90 mol% to 100 mol%, based on the repeating structure of the whole polyamide-imide precursor.

The reaction of the tetracarboxylic dianhydride and the dicarboxylic acid or the dicarboxyl chloride with the diamine may be carried out by any common polymerization method such as solution polymerization, for manufacturing the polyamide-imide precursor, and specifically, the precursor may be manufactured by dissolving the diamine in an organic solvent, adding the tetracarboxylic dianhydride and the dicarboxylic acid or the dicarboxyl chloride to the resulting solution followed by polymerizing thereof. At this time, the total amount of the tetracarboxylic dianhydride and the dicarboxylic acid or the dicarboxyl chloride is more than the amount of the diamine, and for example, they may be mixed at molar ratio of 1 to 1.5:1 or 1 to 1.3:1, preferably 1.05 to 1.1:1 to obtain preferable molecular weight, mechanical properties and viscosity.

The reaction may be performed under inert gas or nitrogen atmosphere, and also performed under anhydrous condition.

Further, the polymerization may be performed at a temperature of -20°C to 60°C, preferably 0°C to 30°C.

Further, the organic solvent which can be used for the polymerization may be, specifically, selected from the group consisting of ketones such as γ-butyrolactone, 1,3-dimethyl-imidazolidinone, methylethyl ketone, cyclohexanone, cyclopentanone, 4-hydroxy-4-methyl-2-pentanone and the like; aromatic hydrocarbons such as toluene, xylene, tetramethylbenzene and the like; glycol ethers (cellosolve) such as ethyleneglycol monoethyl ether, ethyleneglycol monomethyl ether, ethyleneglycol monobutyl ether, diethyleneglycol monoethyl ether, diethyleneglycol monomethyl ether, diethyleneglycol monobutyl ether, propyleneglycol monomethyl ether, propyleneglycol monoethyl ether, dipropyleneglycol diethyl ether, triethyleneglycol monoethyl ether and the like; ethyl acetate, butyl acetate, ethyleneglycol monoethyl ether acetate, ethyleneglycol monobutyl ether acetate, diethyleneglycol monoethyl ether acetate, dipropyleneglycol monomethyl ether acetate, ethanol, propanol, ethyleneglycol, propyleneglycol, carbitol, dimethyl acetamide (DMAc), N,N-diethyl acetamide, dimethyl formamide (DMF), diethyl formamide (DEF), N-methyl pyrrolidone (NMP), N-ethyl pyrrolidone (NEP), 1,3-dimethyl-2-imidazolidinone, N,N-dimethylmethoxy acetamide, dimethyl sulfoxide, pyridine, dimethyl sulfone, hexamethyl phosphoramide, tetramethyl urea, N-methyl caprolactam, tetrahydrofuran, m-dioxane, P-dioxane, 1,2-dimethoxyethane, bis(2-methoxyethyl)ether, 1,2-bis(2-methoxyethoxy)ethane, bis[2-(2-methoxyethoxy)]ether, and a mixture thereof.

More preferably, the solvent may be a sulfoxide-based solvent such as dimethyl sulfoxide, diethyl sulfoxide and the like; a formamide-based solvent such as N,N-dimethyl formamide, N,N-diethyl formamide and the like; an acetamide-based solvent such as N,N-dimethyl acetamide, N,N-diethyl acetamide and the like; a pyrrolidone-based solvent such as N-methyl-2-pyrrolidone, N-vinyl-2-pyrrolidone and the like; a phenol-based solvent such as phenol, o-, m- or p-cresol, xylenol, halogenated phenol, catechol and the like; or hexamethyl phosphoramide, γ-butyrolactone and the like, and the solvent may be used alone or as a mixture thereof, but not limited thereto. An aromatic hydrocarbon such as xylene and toluene may be further used, and in order to accelerate dissolution of the polymer, an alkali metal salt or alkali earth metal salt may be further added to the solvent in an amount of about 50 wt% or less, based on the total amount of the solvent.

The polyamide-imide precursor composition manufactured by the method may contain the solid component in such an amount that the composition has an appropriate viscosity considering its film formation processability such as coatability. According to one embodiment, the content of the composition may be controlled to have the total content of the polymer of 5 to 25 wt%, preferably 5 to 20 wt%, or 5 to 15 wt%.

Further, the content of the composition may be controlled such that the polyamide-imide precursor composition has viscosity of 500 cP or higher or 1,000 cP or higher, preferably 3,000 cP or higher, and the viscosity of the polyamide-imide precursor composition may be controlled to 30,000 cP or lower or 20,000 cP or lower, preferably 18,000 cP or lower or 15,000 cP or lower. If the viscosity of the polyamide-imide precursor composition is lower than 500 cP or higher than 30,000 cP, optical properties of the polyamide-imide film may be deteriorated due to bubble formation during the process and bad surface profile.

Further, the polyamide-imide according to the present invention may have a weight average molecular weight of 10,000 to 200,000 g/mol, 20,000 to 100,000g/mol or 30,000 to 100,000 g/mol.

Further, the polyamide-imide according to the present invention may have a molecular weight distribution (Mw/Mn) of 1.1 to 2.5, preferably. If the imidization rate, weight average molecular weight or molecular weight distribution of the polyamide-imide is out of the range defined above, there may be a difficulty in forming the film or there is a risk that the characteristics of the polyamide-imide-based film such as transmittance, heat resistance, chemical resistance and mechanical properties may be deteriorated.

The polyamide-imide precursor composition may be in the form of a solution dissolved in an organic solvent, and in this case, for example, when the polyamide-imide precursor is synthesized in the organic solvent, the solution may be the reaction solution thus obtained itself or a solution obtained by diluting the reaction solution with another solvent. Further, when the polyamide-imide precursor is obtained as powder, the solution may be a solution obtained by dissolving the powder in an organic solvent.

Further, when preparing the solution by dissolving the polymer powder in an organic solvent, the reaction may be conducted by heating at a temperature of, preferably, 20°C to 150°C, more preferably, 20°C to 80°C.

Subsequently, the resulting polyamide-imide precursor thus obtained from the polymerization is imidized to manufacture a transparent polyamide-imide film. Specifically, the imidization process may be a chemical imidization or thermal imidization method.

For example, the polyamide-imide may be obtained by adding a dehydrating agent and an imidization catalyst to the polymerized polyamide-imide precursor solution, and then heating thereof to a temperature of 50°C to 100°C for imidization by chemical reaction, or refluxing the solution to remove alcohol for imidization.

In the chemical imidization method, the imidization catalyst may be pyridine, triethyl amine, picoline or quinoline, and also, a substituted or unsubstituted nitrogen-containing heterocyclic compound, an N-oxide compound of a nitrogen-containing heterocyclic compound, a substituted or unsubstituted amino acid compound, or an aromatic hydrocarbon compound or an aromatic heterocyclic compound having a hydroxyl group. Particularly, it may be a lower alkylimidazole such as 1,2-dimethylimidazole, N-methylimidazole, N-benzyl-2-methylimidazole, 2-methylimidazole, 2-ethyl-4-methylimidazole, 5-methylbenzimidazole and the like; an imidazole derivative such as N-benzyl-2-methylimidazole and the like; a substituted pyridine such as isoquinoline, 3,5-dimethylpyridine, 3,4-dimethylpyridine, 2,5-dimethylpyridine, 2,4-dimethylpyridine, 4-n-propylpyridine and the like, p-toluene sulfonic acid and the like.

The dehydrating agent may be an acid anhydride such as acetic acid anhydride.

Further, the imidization may be conducted by coating the precursor solution on a substrate followed by heating thereof in an oven or on a hot plate under a condition of 100°C to 300°C, and the heating may be conducted in a multi-step process at various temperatures within the said temperature range.

The organic solvent contained in the polyamide-imide precursor composition of the present invention may be the same with the polymerization solvent.

In the present invention, a silane coupling agent, a crosslinkable compound, an imidization catalyst for effectively proceeding imidization and the like may be added without negatively affecting the desired effect.

A polyamide-imide film having excellent mechanical properties as well as colorless transparency can be manufactured by introducing a polyamide structure to a rigid polyimide molecular structure to increase distance between chains thereby reducing packing between chains, and by combining a substituent having high electronegativity to a diamine structure to reduce charge transfer.

Further, the polyamide-imide-based film may be a colorless transparent polyamide-imide film having a thickness of 20 μm to 100 μm, a haziness of 2 or less, preferably 1 or less, more preferably 0.9 or less, a transmittance of at least 85% to light at a wavelength of 380 nm to 760 nm in the film thickness of 10 μm to 30 μm, and a yellowness index (YI) of about 10 or less, preferably about 7 or less, preferably about 5 or less, more preferably about 4 or less, or 3 or less. The film can exhibit markedly improved transparency and optical properties due to its excellent light transmittance and yellowness index.

Further, the polyamide-imide-based film may be an anisotropic film having an in-plane retardation ($R_{in}$) of about 0 to about 100 nm and a thickness retardation ($R_{th}$) of at least about 200 nm, or an in-plane retardation ($R_{in}$) of about 0 to about 70 nm and a thickness retardation ($R_{th}$) of at least about 300 nm.

Further, the polyamide-imide-based film may have a modulus of at least about 5.0 GPa, or about 5 to about 9 GPa. Surface hardness can be measured three times per pencil under a load of 750 gf using a pencil hardness tester according to the measuring standard JIS K5400, and then degrees of scratch and dent can be observed to determine hardness. The film may have surface hardness of HB or higher, or F or higher, preferably H or higher, more preferably 2H or higher.

The polyamide-imide film according to present invention may have coefficient of thermal expansion (CTE) of 15 ppm/°C or lower at 50°C to 300°C, and solvent resistance index defined as the following Formula 1 of 2% or lower:

[Formula 1]

$$\text{Solvent resistance (\%)} = (T_0 - T_{10})/T_0 \times 100$$

wherein, $T_{10}$ is film thickness after immersing the film in a polar solvent for 10 min, and $T_0$ is film thickness before immersing the film in a polar solvent.

Thus, in another embodiment of the present invention, an article comprising the polyamide-imide copolymer is provided.

The article may contain the polyamide-imide copolymer as a film, a fiber, a coating material, an adhesive and the like, but not limited thereto. The article may be formed by a dry/wet method, a dry method, a wet method and the like using a composite composition of the copolymer and inorganic particles, but not limited thereto. Specifically, as described above, the article may be an optical film, and in the case, the composition comprising the polyamide-imide copolymer may be easily manufactured by being applied on a substrate through a spin coating method followed by being dried and cured.

The polyamide-imide copolymer according to the present invention can have excellent colorless transparent characteristic while maintaining characteristics such as heat resistance, chemical resistance, mechanical strength and the like due to its rigid structure. Thus, it can be used in various fields such as a substrate for a device, a cover substrate for a display, an optical film, an integrated circuit (IC) package, an adhesive film, a multi-layer flexible printed circuit (FPC), a tape, a touch panel, a protection film for an optical disk and the like, and particularly, it can be suitable for a cover substrate for a display.

In particular, the polyamide-imide having the side chain and terminal group of the present invention may be excellent in chemical resistance and weather resistance after processing.

According to another embodiment of the present invention, a display device comprising the article is provided. Specifically, the display device may be a liquid crystal display device (LCD), an organic light emitting diode (OLED) and the like, but not limited thereto.

[Best Mode Carrying out the Invention]

The present invention will be explained in detail with reference to the following examples, including test examples. However, these examples are provided for illustrative purposes only and are not intended to limit the scope of the invention.

<Example 1> TFMB(0.99)/BPDA(0.4)_TPC(0.6)_MOI 0.2 eq

N,N-dimethyl acetamide (DMAc) 350 g was filled in a reactor under nitrogen atmosphere, and then 2,2'-bis(trifluoromethyl)-4,4'-biphenyl diamine (TFMB) 21.5 g was dissolved while maintaining the temperature of the reactor to 25°C. 3,3',4,4'-biphenyltetracarboxylic dianhydride (BPDA) 6 g was added to the TFMB solution at the same temperature, and dissolved with stirring for a predetermined period of time. After enough stirring, the temperature was lowered to 0°C, terephthaloyl chloride (TPC) 9.66 g was added thereto and stirring was continued to obtain a polyamide-imide precursor solution. Viscosity of the polyamide-imide precursor solution manufactured from the reaction was controlled to a predetermined value to obtain a polyamide-imide precursor solution of solid content of 13%. Pyridine 3.29 g and acetic anhydride 3.85 g were added to the solution and stirred enough, and then precipitated with methanol. The precipitated solid was filtered and dried in a 100°C vacuum oven for 24 hours to obtain polyamide-imide solid.

The dried polyamide-imide was dissolved in DMAc 300 g, and 2-Methacryloyloxyethyl isocyanate (MOI) 2 mol and DMAc 50 g were added thereto. The resulting solution was reacted at 50°C for 6 hours and then precipitated with methanol. The precipitated solid was dried to obtain polyamide-imide.

The polyamide-imide solid was dissolved in DMAc to obtain a polyamide-imide composition of solid content of 16%, and the composition was spin coated on a glass substrate in thickness of about 30 μm. The polyamide-imide composition-coated glass substrate was placed in an oven, heated at a rate of 4°C/min, and then cured at 250°C for 60 min. After completing the curing process, the film formed on the glass substrate was stripped from the substrate to obtain a polyamide-imide film.

<Example 2> TFMB(0.99)/BPDA(0.3)_TPC(0.7)_MOI 0.2 eq

The procedure of Example 1 was repeated except for changing the molar ratio of BPDA and TPC to obtain a polyamide-imide film.

<Comparative Example 1> TFMB(0.99)/BPDA(0.4)_TPC(0.7)

The procedure of Example 1 was repeated except for not adding 2-Methacryloyloxyethyl isocyanate (MOI) to obtain a polyamide-imide film.

<Test Example 1>

For the films manufactured in Examples 1 and 2 and Comparative Example 1, chemical resistance was measured.

The films manufactured in Examples 1 and 2 and Comparative Example 1 were immersed in the solvent of Table 1 for 10 min at room temperature, respectively, washed with distilled water, and then dried at 100°C. Conditions of the films were checked.

○: Not dissolved in solvent

Δ: Not dissolved in solvent but deformed

X: Dissolved in solvent

Table 1

| Solvent | Example 1 | Example 2 | Comparative Example 1 |
|---|---|---|---|
| Ethanol | ○ | ○ | Δ |
| Acetone | ○ | ○ | Δ |
| Toluene | ○ | ○ | Δ |
| DMAc | Δ | Δ | X |

From the above results, it can be found that the film of Comparative Example 1 not adding 2-Methacryloyloxyethyl isocyanate (MOI) had worse chemical resistance compared to the films of Examples 1 and 2.

<Example 3> TFMB(0.99)/BPDA(0.20)/6FDA(0.10)_TPA(0.7)_Nadic Anhydride(0.01)_MOI 2 mol

<Manufacture of Polyamide-imide Copolymer>

N,N-dimethyl acetamide (DMAc) 772 g was filled in a 1 L reactor equipped with an agitator, a nitrogen injecting device, a dropping funnel, a temperature controller and a cooler while passing nitrogen gas through the reactor, and temperature of the reactor was set to 25°C. Then, 2,2'-bis(trifluoromethyl)-4,4'-biphenyl diamine (TFMB) 63.40 g was dissolved in the solvent, and temperature of the solution was maintained at 25°C. 4,4'-Biphenyldicarbonyl chloride (6FDA) 8.885 g and 3,3',4,4'-biphenyltetracarboxylic dianhydride (BPDA) 11.76 g were put into the reactor, and dissolved and reacted by stirring for a predetermined period of time. At this time, temperature of the solution was maintained at 25°C. Then, terephthaloyl acid (TPC) 28.66 g was added thereto, stirred for 12 hours, and Nadic Anhydride 0.33 g was added thereto to obtain a polyamide-imide solution of solid content of 13 wt%.

The dried polyamide-imide was dissolved in DMAc 300 g, and 2-Methacryloyloxyethyl isocyanate (MOI) 2 mol and DMAc 50 g were added thereto. The resulting solution was reacted at 50°C for 6 hours and then precipitated with methanol. The precipitated solid was dried to obtain polyamide-imide as a solid powder.

<Manufacture of Polyamide-imide Copolymer Film >

The polyamide-imide solid powder 98 g was dissolved in N,N-dimethyl acetamide (DMAc) to obtain a 13 wt% solution, and the solution thus obtained was coated on a stainless plate, cast to the thickness of 400 μm and dried using hot air of 130°C for 30 min. Then the film was stripped from the stainless plate and fixed to a frame with pins. The film-fixed frame was placed in a vacuum oven, slowly heated from 100°C to 300°C for 2 hours and slowly cooled. A polyamide-imide film was separated from the frame and then heated again at 300°C for 30 min as a final thermal treatment.

<Comparative Example 2> TFMB(1)/6FDA(0.7)_TPC(0.3)

<Manufacture of Polyamide-imide Copolymer >

N,N-dimethyl acetamide (DMAc) 797 g was filled in a 1 L reactor equipped with an agitator, a nitrogen injecting device, a dropping funnel, a temperature controller and a cooler while passing nitrogen gas through the reactor, and temperature of the reactor was set to 25°C. Then, TFMB 64.046 g was dissolved in the solvent, and temperature of the solution was maintained at 25°C. 6FDA 26.655 g was put into the reactor, and dissolved and reacted by stirring for a predetermined period of time. At this time, temperature of the solution was maintained at 25°C. Then, TPC 28.423 g was added thereto to obtain a polyamide-imide precursor solution of solid content of 13 wt%.

Pyridine 13 g and acetic anhydride 17 g were added to the solution, stirred for 30 min and then stirred again at 70°C for 1 hour followed by cooling to room temperature. The resulting solution was precipitated with methanol 20 L, and then the precipitated solid was filtered, pulverized, vacuum dried at 100°C for 6 hours to obtain a polyamide-imide copolymer as a solid powder of 120 g.

<Manufacture of Polyamide-imide Copolymer Film>

The polyamide-imide powder was dissolved in N,N-dimethyl acetamide (DMAc) to obtain a 13 wt% solution.

Then, a film was manufactured by the same method described in Example 3.

<Test Example 2>

<Coefficient of Thermal Expansion (CTE)>

Coefficient of thermal expansion was measured two times using TMA (Perkin Elmer, Diamond TMA) in the temperature range between 50°C and 300°C according to TMA-Method, and at this time, heating rate was 10°C/min and load of 100 mN was applied. The first value was excluded and the second value was presented. Namely, because there may be residual stress in the film after film forming and heat treatment, the residual stress was completely removed through the first run and then the second value was presented as an actual measurement value.

<Measurement of Thickness and Calculation of Solvent Resistance Index >

A polyamide-imide film was dried in a 80°C vacuum oven for 1 hour, and then thickness of the film was measured at five random points. The film was immersed again in a beaker containing DMAc for 10 min, washed with water, dried in the 80°C vacuum oven for 1 hour, and then thickness of the film was measured at five random points. Then, using the thickness of the film before and after the solvent immersion, solvent resistance index defined as the following Formula 1 was calculated.

[Formula 1]

$$\text{Solvent resistance (\%)} = (T_0 - T_{10})/T_0 \times 100$$

wherein, $T_{10}$ is film thickness after immersing the film in a polar solvent for 10 min, and $T_0$ is film thickness before immersing the film in a polar solvent.

Thickness was measured with Anritsu Electronic Micrometer, and deviation of the device was ±0.5% or lower.

Table 2

| | Example 2 | Comparative Example 2 |
|---|---|---|
| Thickness (μm) | 70 | 100 |
| Coefficient of Thermal Expansion (ppm/°C) | 11 | 27 |
| Solvent Resistance Index (%) | 0.5 | 2.5 |
| Yellowness | 3 | 5 |
| Haze | 1.0 | 0.9 |

Although specific embodiments of the present invention are described in detail as described above, it will be apparent to those skilled in the art that the specific description is merely desirable exemplary embodiment and should not be construed as limiting the scope of the present invention. The scope of the present invention is defined by the accompanying claims.

## Claims

1. Polyamide-imide containing a repeating structure of the following Chemical Formula 1a, a repeating structure of the following Chemical Formula 1b and a repeating structure of the following Chemical Formula 1c together as well as containing a terminal group of the following Chemical Formula 1d:

[Chemical Formula 1a]

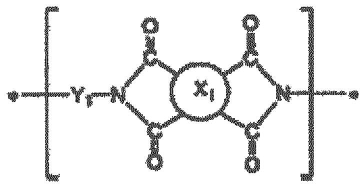

[Chemical Formula 1b]

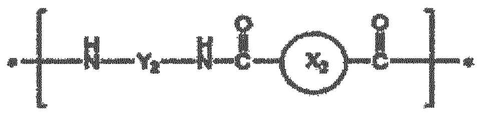

[Chemical Formula 1c]

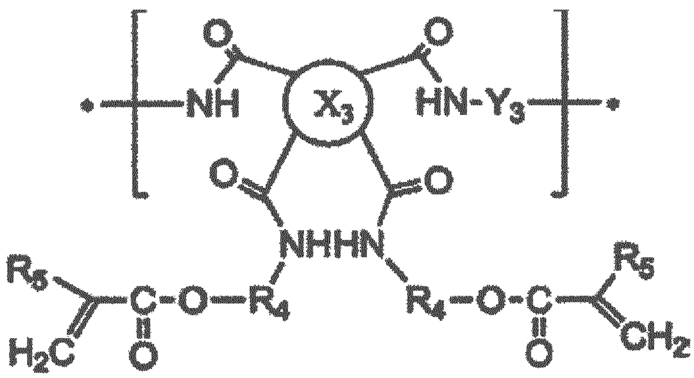

[Chemical Formula 1d]

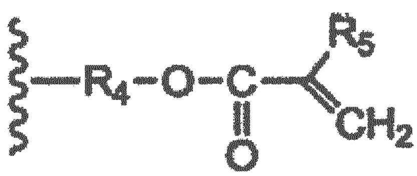

wherein,

$X_1$ and $X_3$ are a tetravalent organic group derived from tetracarboxylic dianhydride,
$X_2$ is a divalent aromatic organic group derived from dicarboxyl halide,
$Y_1$, $Y_2$ and $Y_3$ are a divalent organic group derived from diamine,
$R_4$ is a $C_{1-18}$ alkylene group or a $C_{6-24}$ arylene group or a divalent organic group wherein the groups are linked by an ether bond, an ester bond, an urethane bond, an amide bond, a siloxane bond or a silazane bond, and

$R_5$ is a hydrogen atom or a $C_{1-18}$ alkyl group.

**2.** The polyamide-imide according to claim 1, wherein $X_1$ and $X_3$ contains a tetravalent organic group of the following Chemical Formula 2:

[Chemical Formula 2]

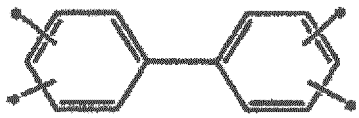

.

**3.** The polyamide-imide according to claim 1, wherein $X_2$ is a divalent organic group derived from the compound of the following Chemical Formula 3:

[Chemical Formula 3]

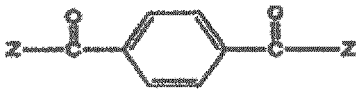

wherein,
Z is one selected from a hydroxyl group (-OH), a halide group selected from -Cl, -Br, -F and -I, and a $C_{1-5}$ alkoxyl group (-OR).

**4.** The polyamide-imide according to claim 1, wherein at least one of $Y_1$, $Y_2$ and $Y_3$ contains a divalent organic group of the following Chemical Formula 4:

[Chemical Formula 4]

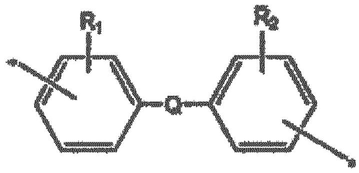

wherein,

$R_1$ and $R_2$ are each independently a substituent selected from a halogen atom comprising -F, -Cl, -Br and -I, a hydroxyl group (-OH), a thiol group (-SH), a nitro group ($-NO_2$), a cyano group, a $C_{1-10}$ alkyl group, a $C_{1-4}$ halogenoalkoxyl group, a $C_{1-10}$ halogenoalkyl group, and a $C_{6-20}$ aryl group, and
Q is selected from the group consisting of a single bond, -O-, $-CR_{18}R_{19}-$, - C(=O)-, -C(=O)O-, -C(=O)NH-, -S-, $-SO_2-$, a phenylene group and a combination thereof, wherein $R_{18}$ and $R_{19}$ are each independently selected from the group consisting of a hydrogen atom, a $C_{1-10}$ alkyl group and a $C_{1-10}$ fluoroalkyl group.

**5.** The polyamide-imide according to claim 4, wherein the divalent organic group of the Chemical Formula 4 is selected from the compounds of the following Chemical Formula 4a to Chemical Formula 4d:

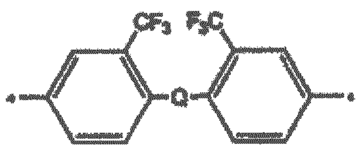

(4a)

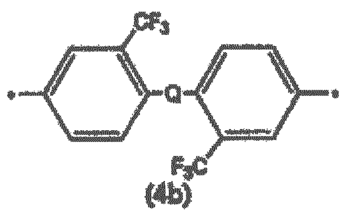

(4b)

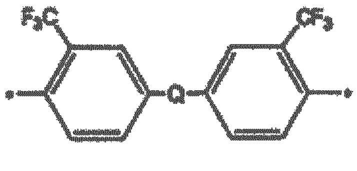

(4c)

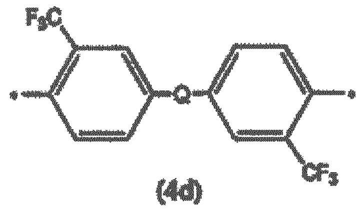

(4d)

**6.** The polyamide-imide according to claim 1, wherein the repeating structure of the Chemical Formula 1a and 1c and the repeating structure of the Chemical Formula 1b are polymerized at a molar ratio of 1: 0.5 to 5.

**7.** The polyamide-imide according to claim 1, wherein the repeating structure of the Chemical Formula 1a to the repeating structure of the Chemical Formula 1c are polymerized in the form of a random copolymer.

**8.** The polyamide-imide according to claim 1, wherein the compounds of the Chemical Formula 1a and the Chemical Formula 1b contains the repeating structures of the following Chemical Formula 1a-1 and Chemical Formula 1b-1:

[Chemical Formula 1a-1]

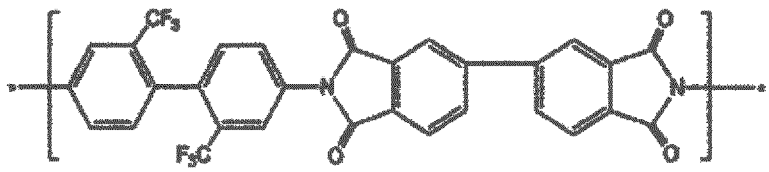

[Chemical Formula 1b-1]

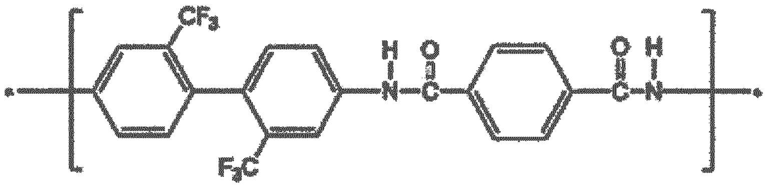

**9.** The polyamide-imide according to claim 1, wherein the side chain of the Chemical Formula 1c and the terminal group of the Chemical Formula 1d are derived from the following Chemical Formula 5:

[Chemical Formula 5]

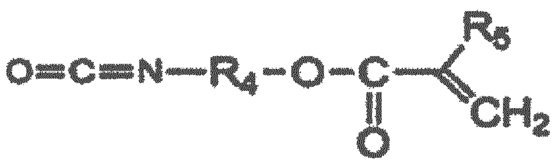

wherein, $R_4$ and $R_5$ have the same meanings as defined in claim 1.

**10.** A method for manufacturing the polyamide-imide of claim 1 comprising the following steps of:

stirring a solution of diamine containing the structure of the following Chemical Formula 4;
adding tetracarboxylic dianhydride containing a structure of the following Chemical Formula 2 and the compound of the following Chemical Formula 3 to the diamine solution followed by reacting thereof to prepare a polyamide-imide precursor;
imidizing the polyamide-imide precursor; and
reacting the polyamide-imide with the compound of the following Chemical Formula 5:

[Chemical Formula 2]

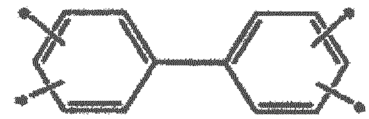

[Chemical Formula 3]

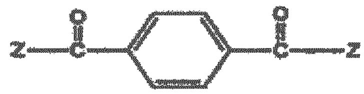

wherein,
Z is selected from a hydroxyl group (-OH), a halide group selected from - Cl, -Br, -F and -I, and $C_{1-5}$ alkoxyl group (-OR),

[Chemical Formula 4]

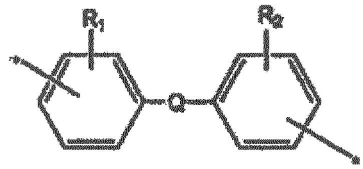

wherein,

$R_1$ and $R_2$ are each independently a substituent selected from a halogen atom comprising -F, -Cl, -Br and -I, a hydroxyl group (-OH), a thiol group (-SH), a nitro group ($-NO_2$), a cyano group, a $C_{1-10}$ alkyl group, a $C_{1-4}$ halogenoalkoxyl group, a $C_{1-10}$ halogenoalkyl group, and a $C_{6-20}$ aryl group, and
Q is selected from the group consisting of a single bond, -O-, $-CR_{18}R_{19}-$, - C(=O)-, -C(=O)O-, -C(=O)NH-, -S-, $-SO_2-$, a phenylene group and a combination thereof, wherein $R_{18}$ and $R_{19}$ are each independently selected from the group consisting of a hydrogen atom, a $C_{1-10}$ alkyl group and a $C_{1-10}$ fluoroalkyl group,

[Chemical Formula 5]

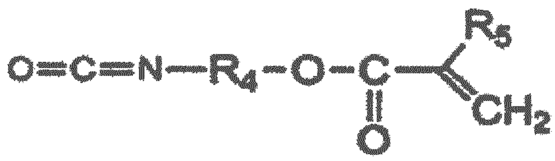

wherein,

$R_4$ is a $C_{1-18}$ alkylene group or a $C_{6-24}$ arylene group or a divalent organic group wherein the groups are linked by an ether bond, an ester bond, an urethane bond, an amide bond, a siloxane bond or a silazane bond, and
$R_5$ is a hydrogen atom or a $C_{1-18}$ alkyl group.

**11.** The method for manufacturing the polyamide-imide according to claim 10, wherein the tetracarboxylic dianhydride of the Chemical Formula 2 and the compound of the Chemical Formula 3 are added at molar ratio of 1: 0.5 to 5.

**12.** The method for manufacturing the polyamide-imide according to claim 10, wherein the compounds of the Chemical Formula 2 and the Chemical Formula 3 and the diamine of the Chemical Formula 4 are reacted at molar ratio of 1 to 1.5:1.

**13.** The method for manufacturing the polyamide-imide according to claim 10, wherein the compound of the Chemical Formula 3 is the compound of the following Chemical Formula 3a or Chemical Formula 3b:

[Chemical Formula 3a]

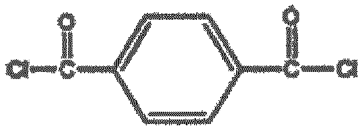

[Chemical Formula 3b]

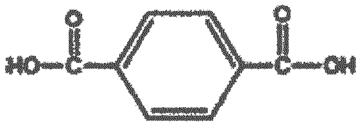

14. The method for manufacturing the polyamide-imide according to claim 10, which further comprise a step of adding tetracarboxylic dianhydride containing a tetravalent organic group of the following Chemical Formula 7a to 7h and reacting thereof:

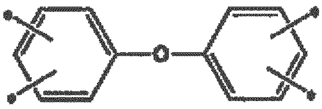

(7a)

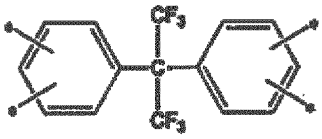

(7b)

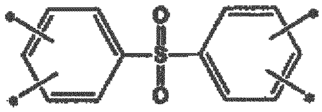

(7c)

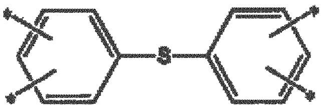

(7d)

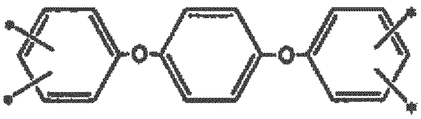

(7e)

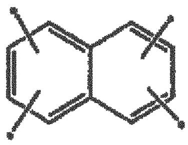

(7f)

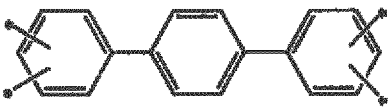

(7g)

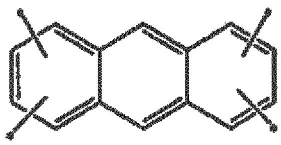

(7h)

15. The method for manufacturing the polyamide-imide according to claim 10, which further comprises a step of adding anhydride and reacting thereof.

**Patentansprüche**

1. Polyamidimid enthaltend zusammen eine Wiederholungsstruktur der folgenden chemischen Formel 1a, eine Wiederholungsstruktur der folgenden chemischen Formel 1b und eine Wiederholungsstruktur der folgenden chemischen Formel 1c sowie enthaltend eine Endgruppe der folgenden chemischen Formel 1d:

[Chemische Formel 1a]

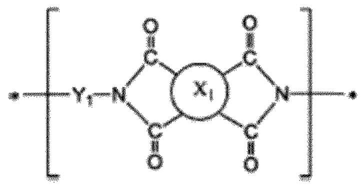

[Chemische Formel 1b]

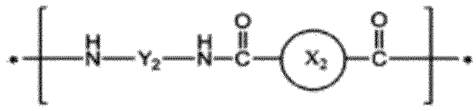

[Chemische Formel 1c]

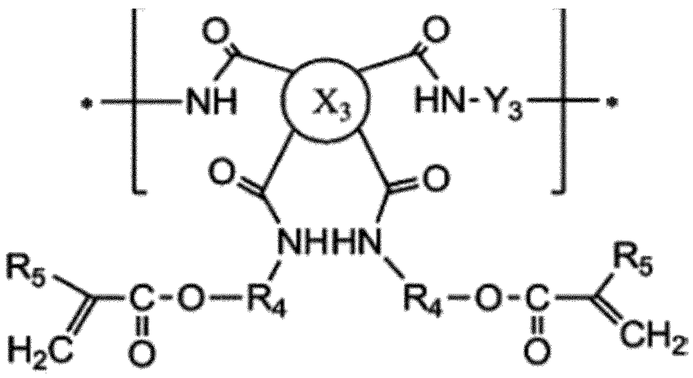

[Chemische Formel 1d]

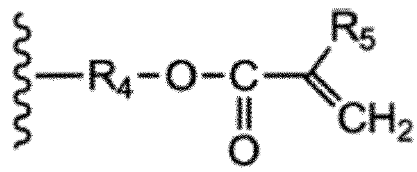

,

wobei

$X_1$ und $X_3$ eine tetravalente organische Gruppe abgeleitet von Tetracarbonsäuredianhydrid sind,
X2 eine divalente aromatische organische Gruppe abgeleitet von Dicarbonsäurehalogenid ist,
$Y_1$, $Y_2$ und $Y_3$ eine divalente organische Gruppe abgeleitet von Diamin sind,
$R_4$ eine $C_{1-18}$-Alkylengruppe oder eine $C_{6-24}$-Arylengruppe oder eine divalente organische Gruppe ist, wobei die Gruppen über eine Etherbindung, eine Esterbindung, eine Urethanbindung, eine Amidbindung, eine Siloxanbindung oder eine Silazanbindung verknüpft sind, und
$R_5$ ein Wasserstoffatom oder eine $C_{1-18}$-Alkylgruppe ist.

2. Polyamidimid nach Anspruch 1, wobei $X_1$ und $X_3$ eine tetravalente organische Gruppe der folgenden chemischen Formel 2 enthalten:

[Chemische Formel 2]

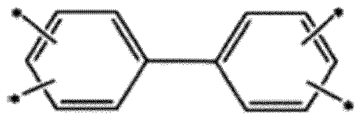

.

3. Polyamidimid nach Anspruch 1, wobei $X_2$ eine divalente organische Gruppe abgeleitet von der Verbindung der folgenden chemischen Formel 3 ist:

[Chemische Formel 3]

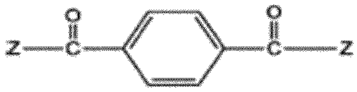

,

wobei Z eines ist, ausgewählt aus einer Hydroxylgruppe (-OH), einer Halogenidgruppe ausgewählt aus -Cl, -Br, -F und -I und einer $C_{1-5}$-Alkoxylgruppe (-OR).

4. Polyamidimid nach Anspruch 1, wobei wenigstens eines von $Y_1$, $Y_2$ und $Y_3$ eine divalente organische Gruppe der folgenden chemischen Formel 4 enthält:

[Chemische Formel 4]

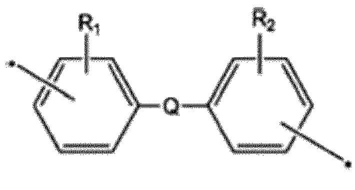

,

wobei

$R_1$ und $R_2$ jeweils unabhängig ein Substituent sind, ausgewählt aus einem Halogenatom umfassend -F, -Cl, -Br und -I, einer Hydroxylgruppe (-OH), einer Thiolgruppe (-SH), einer Nitrogruppe (-$NO_2$), einer Cyanogruppe, einer $C_{1-10}$-Alkylgruppe, einer $C_{1-4}$-Halogenalkoxylgruppe, einer $C_{1-10}$-Halogenalkylgruppe und einer $C_{6-20}$-Arylgruppe, und
Q ausgewählt ist aus der Gruppe bestehend aus einer Einfachbindung, -O-, -$CR_{18}R_{19}$-, -C(=O)-, -C(=O)O-, -C(=O)NH-, -S-, -$SO_2$-, einer Phenylengruppe und einer Kombination derselben, wobei $R_{18}$ und $R_{19}$ jeweils unabhängig ausgewählt sind aus der Gruppe bestehend aus einem Wasserstoffatom, einer $C_{1-10}$-Alkylgruppe und einer $C_{1-10}$-Fluoralkylgruppe.

5. Polyamidimid nach Anspruch 4, wobei die divalente organische Gruppe der chemischen Formel 4 ausgewählt ist

aus den Verbindungen der folgenden chemischen Formel 4a bis chemischen Formel 4d:

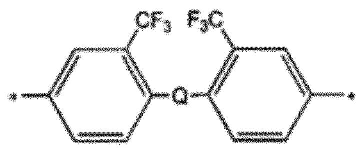

(4a)

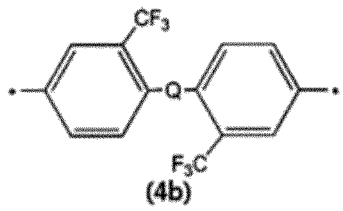

(4b)

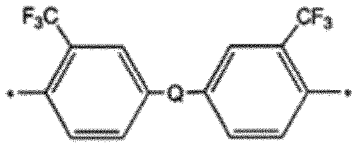

(4c)

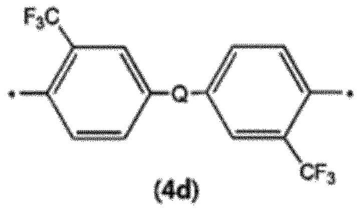

(4d)

.

**6.** Polyamidimid nach Anspruch 1, wobei die Wiederholungsstruktur der chemischen Formel 1a und 1c und die Wiederholungsstruktur der chemischen Formel 1b in einem Molverhältnis von 1:0,5 bis 5 polymerisiert sind.

**7.** Polyamidimid nach Anspruch 1, wobei die Wiederholungsstruktur der chemischen Formel 1a bis zur Wiederholungsstruktur der chemischen Formel 1c in der Form eines statistischen Copolymers polymerisiert sind.

**8.** Polyamidimid nach Anspruch 1, wobei die Verbindungen der chemischen Formel 1a und der chemischen Formel 1b die Wiederholungsstrukturen der folgenden chemischen Formel 1a-1 und chemischen Formel 1b-1 enthalten:

[Chemische Formel 1a-1]

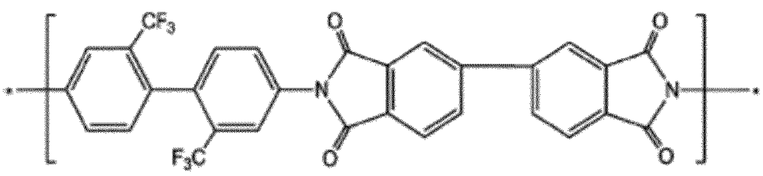

[Chemische Formel 1b-1]

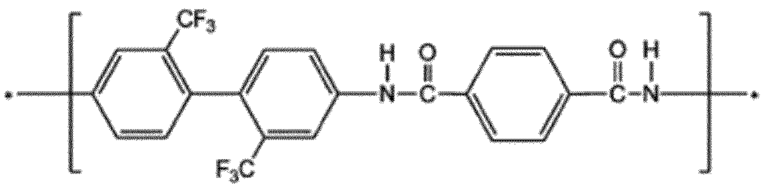

.

**9.** Polyamidimid nach Anspruch 1, wobei die Seitenkette der chemischen Formel 1c und die Endgruppe der chemischen Formel 1d von der folgenden chemischen Formel 5 abgeleitet sind:

[Chemische Formel 5]

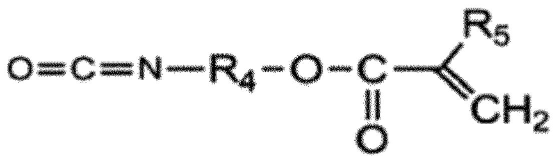

,

wobei $R_4$ und $R_5$ die gleichen Bedeutungen wie in Anspruch 1 definiert aufweisen.

**10.** Verfahren zum Herstellen des Polyamidimids nach Anspruch 1, umfassend die folgenden Schritte:

Rühren einer Mischung eines Diamins enthaltend die Struktur der folgenden chemischen Formel 4;
Zufügen von Tetracarbonsäuredianhydrid enthaltend eine Struktur der folgenden chemischen Formel 2 und der Verbindung der folgenden chemischen Formel 3 zu der Diaminlösung, gefolgt von einer Umsetzung derselben, um eine Polyamidimidvorstufe herzustellen;
Imidizieren der Polyamidimidvorstufe; und
Umsetzen des Polyamidimids mit der Verbindung der folgenden chemischen Formel 5:

[Chemische Formel 2]

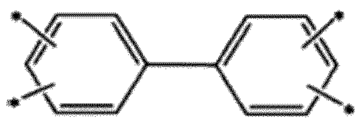

[Chemische Formel 3]

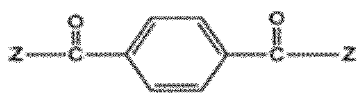

,

wobei
Z ausgewählt ist aus einer Hydroxylgruppe (-OH), einer Halogenidgruppe ausgewählt aus -Cl, -Br, -F und -I und einer $C_{1-5}$-Alkoxylgruppe (-OR),

[Chemische Formel 4]

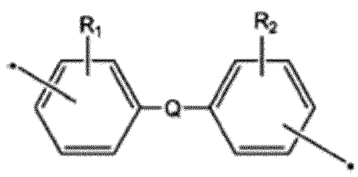

,

wobei

$R_1$ und $R_2$ jeweils unabhängig ein Substituent sind, ausgewählt aus einem Halogenatom umfassend -F, -Cl, -Br und -I, einer Hydroxylgruppe (-OH), einer Thiolgruppe (-SH), einer Nitrogruppe ($-NO_2$), einer Cyanogruppe, einer $C_{1-10}$-Alkylgruppe, einer $C_{1-4}$-Halogenalkoxylgruppe, einer $C_{1-10}$-Halogenalkylgruppe und einer $C_{6-20}$-Arylgruppe, und
Q ausgewählt ist aus der Gruppe bestehend aus einer Einfachbindung, -O-, $-CR_{18}R_{19}-$, -C(=O)-, -C(=O)O-, -C(=O)NH-, -S-, $-SO_2-$, einer Phenylengruppe und einer Kombination derselben, wobei $R_{18}$ und $R_{19}$ jeweils unabhängig ausgewählt sind aus der Gruppe bestehend aus einem Wasserstoffatom, einer $C_{1-10}$-Alkylgruppe und einer $C_{1-10}$-Fluoralkylgruppe,

[Chemische Formel 5]

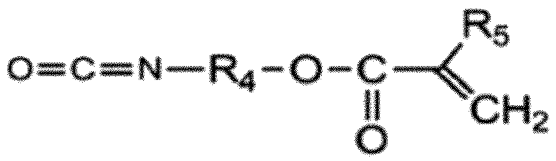

,

wobei

$R_4$ eine $C_{1-18}$-Alkylengruppe oder eine $C_{6-24}$-Arylengruppe oder eine divalente organische Gruppe ist, wobei die Gruppen über eine Etherbindung, eine Esterbindung, eine Urethanbindung, eine Amidbindung, eine Siloxanbindung oder eine Silazanbindung verknüpft sind, und
$R_5$ ein Wasserstoffatom oder eine $C_{1-18}$-Alkylgruppe ist.

**11.** Verfahren zum Herstellen des Polyamidimids nach Anspruch 10, wobei das Tetracarbonsäuredianhydrid der chemischen Formel 2 und die Verbindung der chemischen Formel 3 in einem molaren Verhältnis von 1:0,5 bis 5 zugegeben werden.

**12.** Verfahren zum Herstellen des Polyamidimids nach Anspruch 10, wobei die Verbindungen der chemischen Formel 2 und der chemischen Formel 3 und das Diamin der chemischen Formel 4 in einem Molverhältnis von 1 bis 1,5:1 umgesetzt werden.

**13.** Verfahren zum Herstellen des Polyamidimids nach Anspruch 10, wobei die Verbindung der chemischen Formel 3 die Verbindung der folgenden chemischen Formel 3a oder chemischen Formel 3b ist:

[Chemische Formel 3a]

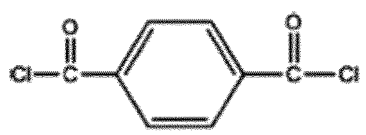

[Chemische Formel 3b]

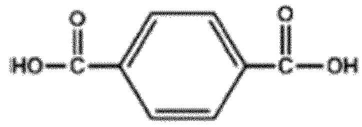

14. Verfahren zum Herstellen des Polyamidimids nach Anspruch 10, welches weiter einen Schritt eines Zufügens von Tetracarbonsäuredianhydrid enthaltend eine tetravalente organische Gruppe der folgenden chemischen Formel 7a bis 7h und eines Umsetzens desselben umfasst:

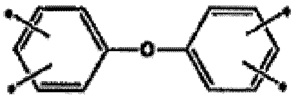

(7a)

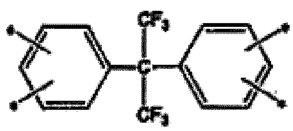

(7b)

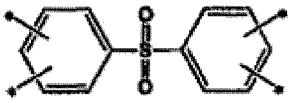

(7c)

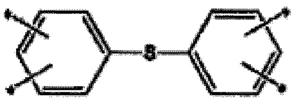

(7d)

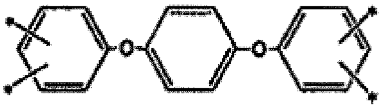

(7e)

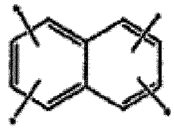

(7f)

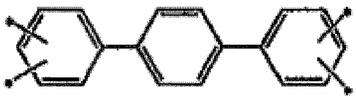

(7g)

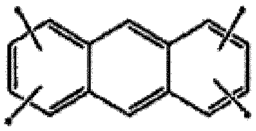

(7h)

15. Verfahren zum Herstellen des Polyamidimids nach Anspruch 10, welches ferner einen Schritt eines Zufügens von Anhydrid und eine Umsetzung desselben umfasst.

**Revendications**

1. Polyamidimide contenant un motif récurrent de la formule chimique la ci-dessous, un motif récurrent de la formule chimique 1b ci-dessous et un motif récurrent de la formule chimique 1c ci-dessous tout en contenant un groupe terminal de la formule chimique 1d suivante :

[Formule chimique 1a]

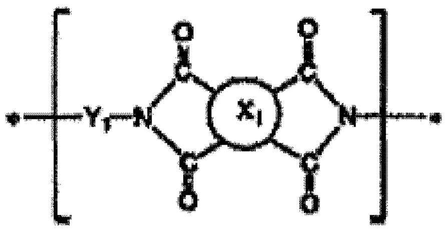

[Formule chimique 1b]

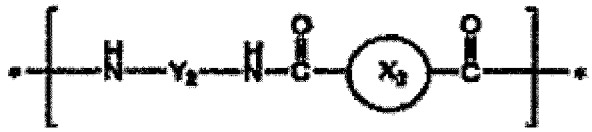

[Formule chimique 1c]

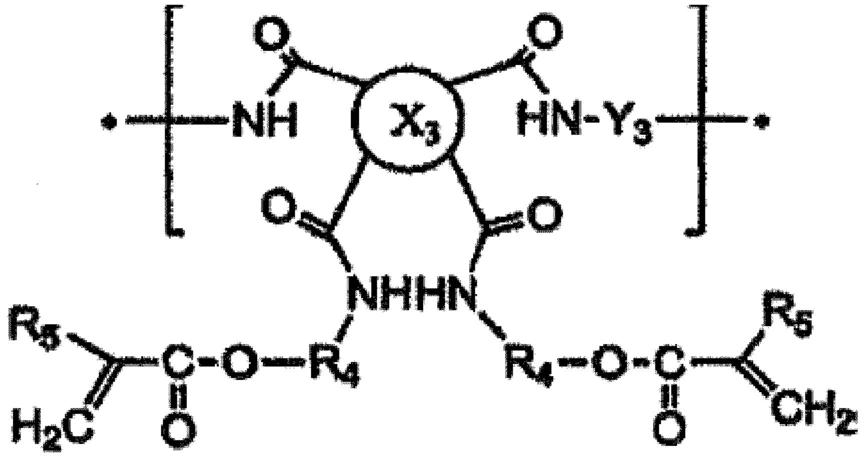

[Formule chimique 1d]

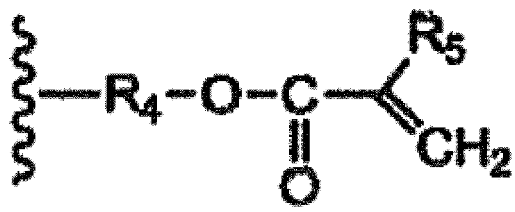

dans lesquelles,

$X_1$ et $X_3$ représentent un groupe organique tétravalent dérivé du dianhydride tétracarboxylique,
$X_2$ représente un groupe organique aromatique divalent dérivé de l'halogénure dicarboxylique,
$Y_1$, $Y_2$ et $Y_3$ représentent un groupe organique divalent dérivé de la diamine,
$R_4$ représente un groupe alkylène en $C_1$ à $C_{18}$ ou un groupe arylène en $C_6$ $C_{24}$ ou un groupe organique divalent dans lequel les groupes sont reliés par une liaison éther, une liaison ester, une liaison uréthane, une liaison amide, une liaison siloxane ou une liaison silazane, et
$R_5$ représente un atome d'hydrogène ou un groupe alkyle en $C_1$ à $C_{18}$.

**2.** Polyamidimide selon la revendication 1, dans lequel $X_1$ et $X_2$ contiennent un groupe organique tétravalent de la formule chimique 2 suivante :

[Formule chimique 2]

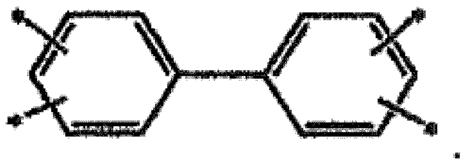

**3.** Polyamidimide selon la revendication 1, dans laquelle $X_2$ représente un groupe organique divalent dérivé du composé de la formule chimique 3 suivante :

[Formule chimique 3]

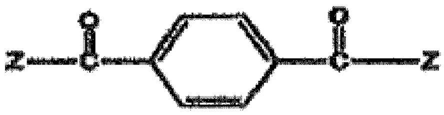

dans laquelle,
Z est sélectionné dans un groupe hydroxyle (-OH), un groupe halogénure sélectionné parmi -Cl, -Br, -F et -I et un groupe alcoxyle en $C_1$ à $C_5$ (-OR).

**4.** Polyamidimide selon la revendication 1, dans laquelle au moins un de $Y_1$, $Y_2$ et de $Y_3$ contient un groupe organique divalent de la formule chimique 4 suivante :

[Formule chimique 4]

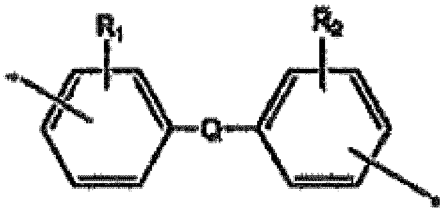

dans laquelle,

$R_1$ et $R_2$ représentent chacun indépendamment un substituant sélectionné parmi un atome d'halogène comprenant -F, -Cl, -Br et -I, un groupe hydroxyle (-OH), un groupe thiol (-SH), un groupe nitro ($-NO_2$), un groupe cyano, un groupe alkyle en $C_1$ à $C_{10}$, un groupe halogénoalcoxyle en $C_1$ à $C_4$, un groupe halogénoalkyle en $C_1$ à $C_{10}$ et un groupe aryle en $C_6$ à $C_{20}$, et
Q est sélectionné dans le groupe constitué d'une liaison unique, de -O-, - $CR_{18}R_{19}$-, -C(=O)-, -C(=O)O-, -C(=O)NH-, -S-, $-SO_2-$, d'un groupe phénylène et d'une combinaison de ceux-ci, où $R_{18}$ et $R_{19}$ sont chacun indépendamment sélectionnés dans le groupe constitué d'un atome d'hydrogène, d'un groupe alkyle en $C_1$ à $C_{10}$ et d'un groupe fluoroalkyle en $C_1$ à $C_{10}$.

**5.** Polyamidimide selon la revendication 4, dans laquelle le groupe organique divalent de la formule chimique 4 est sélectionné parmi les composants de la formule chimique 4a à la formule chimique 4d suivantes :

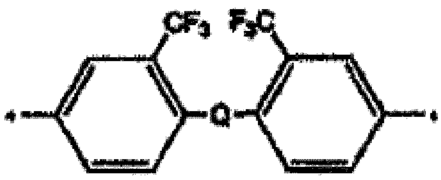

(4a)

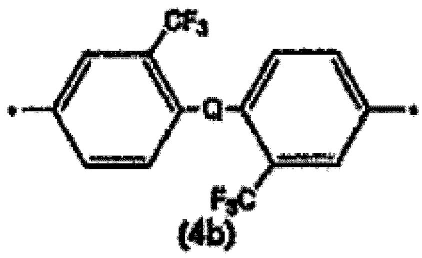

(4b)

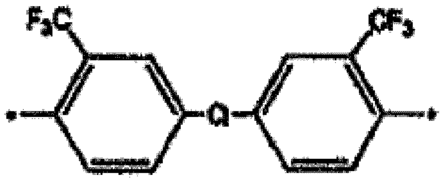

(4c)

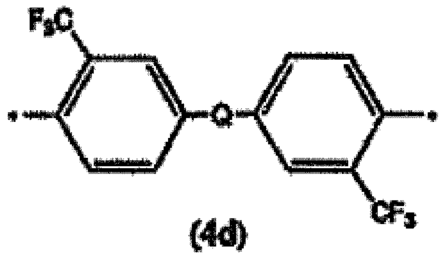

(4d)

6. Polyamidimide selon la revendication 1, dans laquelle le motif récurrent de la formule chimique 1a et 1c et le motif récurrent de la formule chimique 1b sont polymérisés à un rapport molaire de 1 : 0,5 à 5.

7. Polyamidimide selon la revendication 1, dans laquelle le motif récurrent de la formule chimique la jusqu'au motif récurrent de la formule chimique 1c sont polymérisés sous la forme d'un copolymère aléatoire.

8. Polyamidimide selon la revendication 1, dans laquelle les composés de la formule chimique 1a et de la formule chimique 1b contiennent les motifs récurrents de la formule chimique 1a-1 et de la formule chimique 1b-1 suivantes ;

[Formule chimique 1a-1]

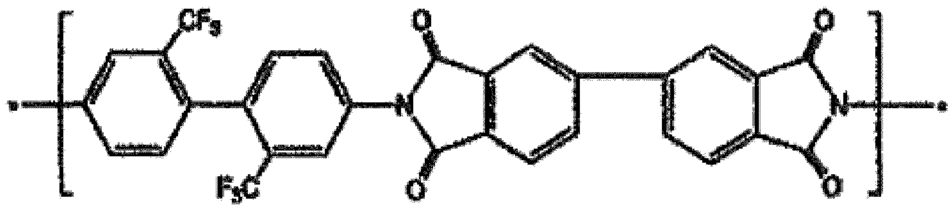

[Formule chimique 1b-1]

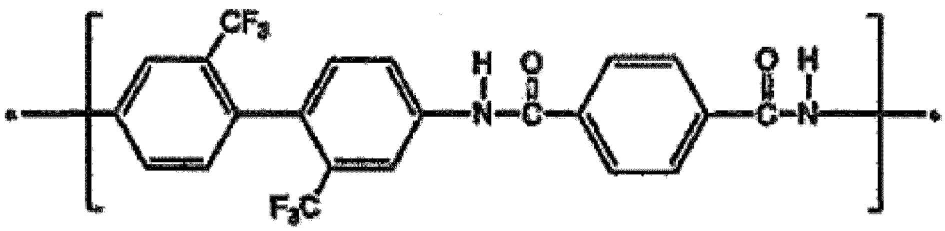

9. Polyamidimide selon la revendication 1, dans laquelle la chaîne latérale de la formule chimique 1c et le groupe terminal de la formule chimique 1d sont dérivés de la formule chimique 5 suivante :

[Formule chimique 5]

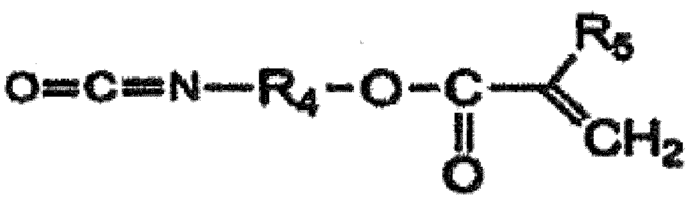

dans laquelle $R_4$ et $R_5$ ont les mêmes significations que celles définies dans la revendication 1.

10. Procédé de fabrication de la polyamidimide selon la revendication 1 comprenant les étapes suivantes consistant à :

mélanger une solution de diamine contenant le motif de la formule chimique 4 suivante ;
ajouter du dianhydride tétracarboxylique contenant un motif de la formule chimique 2 suivante et le composé de la formule chimique 3 suivante à la solution de diamine suivie par la réaction de celle-ci afin de préparer un précurseur de polyamidimide ; et
imidiser le précurseur de polyamidimide ; et
faire réagir la polyamidimide avec le composé de la formule chimique 5 suivante :

[Formule chimique 2]

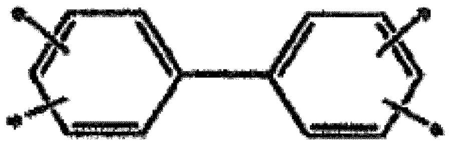

[Formule chimique 3]

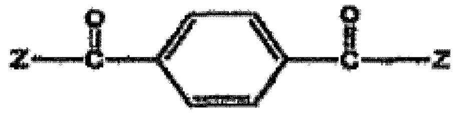

dans laquelle,
Z est sélectionné dans un groupe hydroxyle (-OH), un groupe halogénure sélectionné parmi -Cl, -Br, -F, et -I, et un groupe alcoxyle en $C_1$ à $C_5$ (-OR),

[Formule chimique 4]

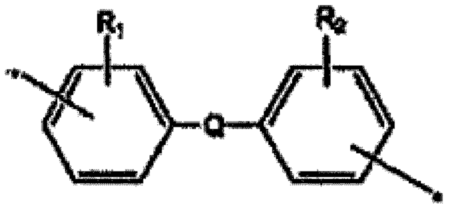

dans laquelle,

$R_1$ et $R_2$ représentent chacun indépendamment un substituant sélectionné parmi un atome d'halogène comprenant -F, -Cl, -Br et -I, un groupe hydroxyle (-OH), un groupe thiol (-SH), un groupe nitro ($-NO_2$), un groupe cyano, un groupe alkyle en $C_1$ à $C_{10}$, un groupe halogénoalcoxyle en $C_1$ à $C_4$, un groupe halogénoalkyle en $C_1$ à $C_{10}$ et un groupe aryle en $C_6$ à $C_{20}$, et
Q est sélectionné dans le groupe constitué d'une liaison simple, de -O-, - $CR_{18}R_{19}$-, -C(=O)-, -C(=O)O-, -C(=O)NH-, -S-, $-SO_2$-, d'un groupe phénylène et d'une combinaison de ceux-ci, où $R_{18}$ et $R_{19}$ sont indépendamment sélectionnés dans le groupe constitué d'un atome d'hydrogène, d'un groupe alkyle en $C_1$ à $C_{10}$ et d'un groupe fluoroalkyle en $C_1$ à $C_{10}$,

[Formule chimique 5]

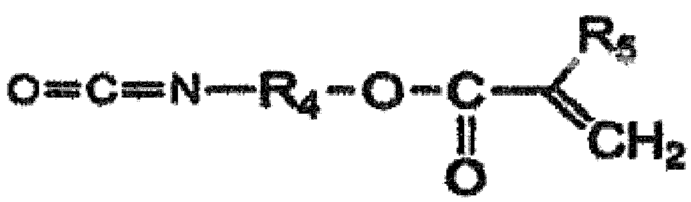

dans laquelle,

> $R_4$ représente un groupe alkylène en $C_1$ à $C_{18}$ ou un groupe arylène en $C_6$ à $C_{24}$ ou un groupe organique divalent dans lequel les groupes sont liés par une liaison éther, une liaison ester, une liaison uréthane, une liaison amide, une liaison siloxane ou une liaison silazane, et
> $R_5$ représente un atome d'hydrogène ou un groupe alkyle en $C_1$ à $C_{18}$.

**11.** Procédé de fabrication de la polyamidimide selon la revendication 10, dans lequel le dianhydride tétracarboxylique de la formule chimique 2 et le composé de la formule chimique 3 sont ajoutés à un rapport molaire de 1 : 0,5 à 5.

**12.** Procédé de fabrication de la polyamidimide selon la revendication 10, dans lequel les composés de la formule chimique 2 et de la formule chimique 3 et la diamine de la formule chimique 4 sont mis à réagir à un rapport molaire de 1 à 1,5 : 1.

**13.** Procédé de fabrication de la polyamidimide selon la revendication 10, dans lequel le composé de la formule chimique 3 est le composé de la formule chimique 3a ou de la formule chimique 3b suivante :

[Formule chimique 3a]

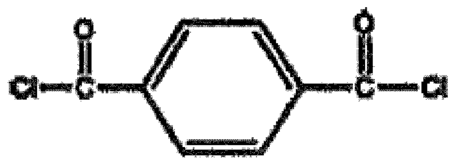

[Formule chimique 3b]

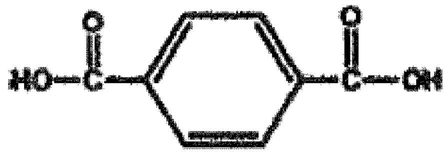

**14.** Procédé de fabrication de la polyamidimide selon la revendication 10, qui comprend en outre une étape d'ajout de dianhydride tétracarboxylique contenant un groupe organique tétravalent de la formule chimique 7a à 7h suivante et la mise en réaction de celui-ci.

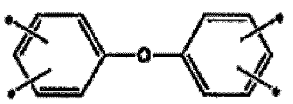

(7a)

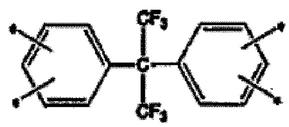

(7b)

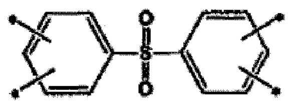

(7c)

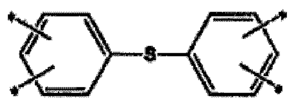

(7d)

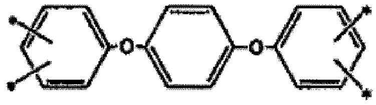

(7e)

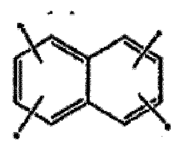

(7f)

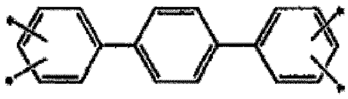

(7g)

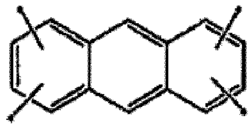

(7h)

15. Procédé de fabrication de la polyamidimide selon la revendication 10, qui comprend en outre une étape d'ajout de l'anhydride et de la mise en réaction de celui-ci.